# DEMANDE DE BREVET EUROPEEN

(11) **EP 2 322 377 A1**
(43) Date de publication de la demande: **18.05.2011**
(21) Numéro de dépôt: 10189911.0
(22) Date de dépôt: 03.11.2010
(51) Int. Cl.: B60N 2/01, B60N 2/06, B60N 2/12, B60N 2/30

(54) **Aménagement d'intérieur de véhicule**

(30) Priorité: 16.11.2009 FR 0958076
(71) Demandeur: GRUPO ANTOLIN-INGENIERIA, S.A., 09080 Burgos (ES)
(72) Inventeur: Boyer, Nathanaël, 43370, CUSSAC SUR LOIRE (FR); Decombe, François, 42290, SORBIERS (FR); Aissou, Abdenacer, 69340, FRANCHEVILLE (FR)
(74) Mandataire: Delorme, Nicolas

(57) **Abrégé**

Cet ensemble d'aménagement d'un habitacle d'un véhicule comprenant un siège (3), présentant une assise et un dossier, et un support faisant partie de l'habitacle du véhicule.

Selon l'invention, cet ensemble d'aménagement comprend (i) un dispositif de fixation du siège (3) sur le support et de réglage de la position du siège (3) par rapport audit support, comprenant des moyens d'accostage fixés sur une face latérale de l'assise du siège (3) conçus pour coopérer avec des moyens de réception fixés sur le support et des moyens de réception déconnectables permettant l'amovibilité du siège par rapport au support et en ce que (ii) le siège (3) possède un piétement destiné à coopérer avec une unique glissière (32) fixée sur un plancher du véhicule dans plusieurs positions.

## Description

La présente invention concerne un ensemble d'aménagement des sièges pour un véhicule automobile.

Les véhicules automobiles sont équipés de sièges sur lesquels des passagers peuvent prendre place.

Certains véhicules comprennent trois rangées de sièges conventionnellement numérotées 1, 2 et 3 en partant de la rangée qui se situe à l'avant du véhicule.

L'accès aux places de rang 1 et de rang 2 se fait par des portes battantes ou coulissantes et est donc aisé. En revanche, l'accès aux sièges de rang 3 peut être plus difficile car les sièges de rang 3 se trouvent en arrière des sièges de rangs 2 et donc ne bénéficient pas de portes d'accès propres.

Certains sièges de rang 2 sont pourvus de fonction dite APA (accès place arrière) ; ces sièges sont toutefois complexes et couteux à fabriquer.

Par ailleurs, on connaît par le document DE 3803516, un siège qui est fixé sur le plancher et sur le tunnel de transmission d'un véhicule.

Dans ce contexte technique, un but de l'invention est de proposer un ensemble d'aménagement de sièges de véhicule automobile qui facilite l'accès aux places arrière.

L'invention concerne un ensemble d'aménagement d'un habitacle d'un véhicule comprenant un siège présentant, une assise et un dossier, et un support faisant partie de l'habitacle du véhicule, caractérisé en ce que l'ensemble d'aménagement comprend (i) un dispositif de fixation du siège sur le support et de réglage de la position du siège par rapport audit support comprenant des moyens d'accostage fixés sur une face latérale de l'assise du siège conçus pour coopérer avec des moyens de réception fixés sur le support et des moyens de réception déconnectables permettant l'amovibilité du siège par rapport au support et en ce que (ii) le siège possède un piétement destiné à coopérer avec une unique glissière fixée sur un plancher du véhicule dans plusieurs positions.

Ainsi l'invention propose un siège qui est partiellement fixé sur un support tel que, par exemple, un siège ou un passage de roue et sur une glissière unique. L'invention fournit donc un siège qui peut être déplacé sur une course permettant un accès à des places arrière avec une unique glissière. Un aspect avantageux de l'invention est que celle-ci propose de rendre mobile et amovible un siège avec un impact sur l'architecture générale du véhicule qui se limite à une unique glissière.

Selon d'autres dispositions de l'invention :
- le support est un siège support fixé de manière autonome sur le plancher du véhicule.
- le siège support comprend au moins une platine de réception sur laquelle vient s'engager un rail d'accostage fixé sur le siège.
- le siège support comprend deux galets disposés en retrait de la platine de réception sur lesquels s'appuie une surface plane du rail d'accostage,
- la platine de réception présente des lumières qui coïncident avec des lumières prévues dans un brancard latéral du siège support et des verrous postérieurs et antérieurs, embarqués sur un brancard du siège, sont mobiles entre une position de verrouillage dans laquelle les verrous postérieurs et antérieurs s'engagent dans les lumières et une position de déverrouillage dans laquelle les verrous sont dégagés des lumières,
- la platine de réception présente une nervure qui surplombe les lumières permettant aux verrous postérieurs et antérieurs d'être dégagés des lumières autorisant un déplacement longitudinal du siège et interdisant un déplacement vertical du siège,
- le siège support est associé à deux sièges.

L'invention concerne également un véhicule automobile équipé de l'ensemble d'aménagement intérieur précité.

Pour sa bonne compréhension, l'invention est décrite en référence au dessin ci annexé représentant, à titre d'exemple non limitatif, une forme de réalisation d'un ensemble d'aménagement selon celle-ci.
Figure 1 montre, en perspective, ensemble d'aménagement comprenant deux sièges de part et d'autre à un siège support conventionnel,
Figure 2 montre, en perspective, un siège support conventionnel dont l'une des faces latérales est équipée d'éléments de réception d'un siège selon l'invention,
Figure 3 montre, en perspective, un siège équipé de moyens d'accostage selon l'invention,
Figures 4 et 5 montrent, respectivement, la face interne et la face externe des moyens de réception embarqués sur le siège support,
Figures 6 et 7 montrent, respectivement, les faces extérieures et intérieures des moyens d'accrochage du siège selon l'invention,
Figures 8 à 10 montrent l'accostage d'un siège sur un siège support,
Figures 9a et 10a montrent, à une échelle agrandie, l'accostage des moyens d'accrochage du siège selon l'invention sur les moyens de réception du siège support,
Figure 11 et ses figures associées 11a, 11b, 11c, 11d montrent des moyens d'accostage d'un siège selon l'invention coopérant avec des moyens de réception d'un siège support,
Figures 12 à 14 montrent le fonctionnement du siège dans ses positions nominales avec réglage de position longitudinale et accès au place arrière.

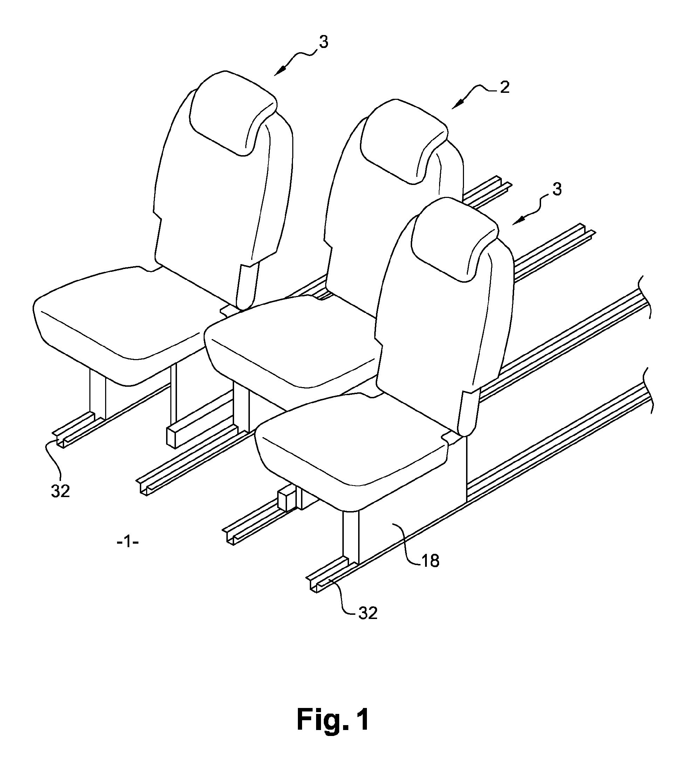

Comme on peut le voir sur la figure 1, un aspect de l'invention est d'assurer la fixation d'un siège de manière mixte. En d'autres termes, le siège est fixé à la fois sur une glissière et sur une partie du véhicule, cette partie pouvant être comme le montre la figure 1, un siège. Cela permet de donner une course longitudinale au siège notamment pour un accès aux places arrière sans que, pour autant, l'architecture du véhicule ne soit bouleversée puisque une seule glissière est nécessaire pour assurer la mobilité du siège. Dans l'exemple représenté à la figure 1, il est prévu un siège support 2 qui présente une structure conventionnelle avec un piétement fixé sur le plancher du véhicule. Le siège support 2 comprend deux brancards 4 latéraux qui sont reliés au plancher.

Le siège support 2, dans l'exemple représenté, est le siège central d'une rangée de trois sièges qui peut être, par exemple, la deuxième rangée d'un véhicule qui comprend trois rangées de sièges.

Le siège support 2 est équipé de moyens de réception sur chacun de ses côtés.

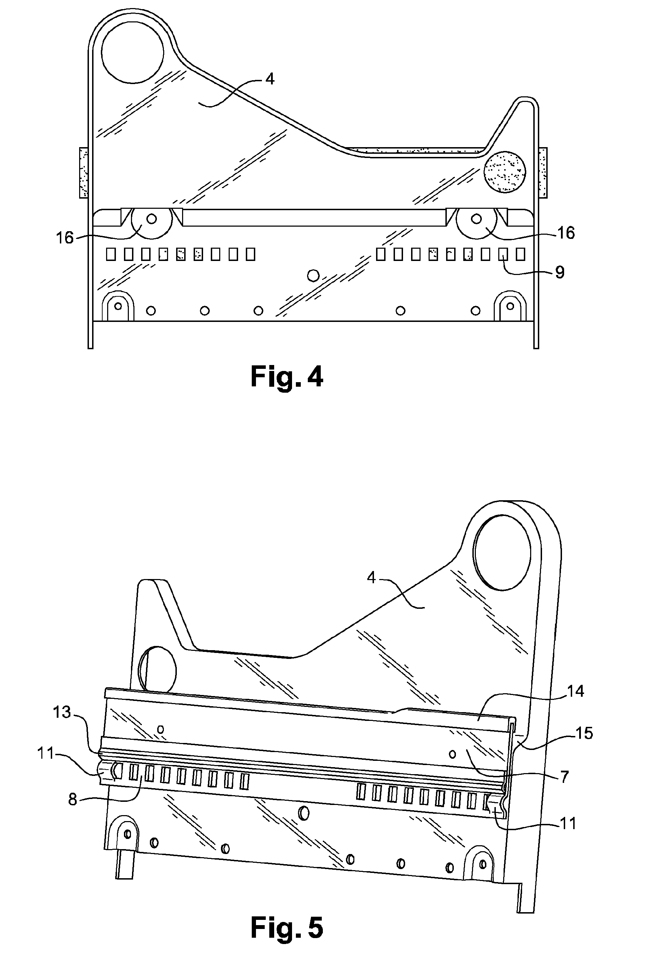

Ces moyens de réception sont plus particulièrement représentés aux figures 4 et 5.

Sur ces figures, apparaît le brancard 4 latéral qui forme le piètement du siège support 2. Ce brancard 4 peut être réalisé de manière conventionnelle en tôle emboutie.

Ce brancard 4 latéral est équipé de plusieurs dispositions propres à l'invention puisque l'on peut voir qu'il est doté d'une platine 7 de réception qui s'étend sur toute la longueur du brancard 4. La platine 7 est donc fixée sur la face latérale du brancard 4. La platine 7 présente, dans sa partie inférieure, une série de lumières 8 qui coïncide avec une série de lumières 9 réalisée dans le brancard 4 lui-même.

On peut voir qu'au niveau des lumières 8, à chaque extrémité de la platine 7 de réception, il est prévu deux butées 11 qui, dans l'exemple représenté, sont formées par emboutissage.

Les lumières 8 sont bordées sur leur face supérieure par une nervure 13 en forme de lèvre dont la fonction apparaîtra plus loin.

L'arête supérieure de la platine 7 de réception est dotée d'un joint 14 en matériau souple en forme générale de U qui est chaussée sur l'arête supérieure.

Le brancard 4 comprend un épaulement 15 formé par emboutissage qui sépare une partie inférieure du brancard 4 et une partie supérieure du brancard 4 qui est en retrait. La platine 7 de réception vient en applique contre le brancard 4 sur sa partie inférieure de telle sorte que la platine 7 de réception est décalée de la partie supérieure du brancard.

On note également que le brancard 4 incorpore deux galets 16. Ces deux galets 16 dépassent de l'épaulement 15 et sont interposés entre la partie supérieure du brancard 4 et la platine 7 de réception.

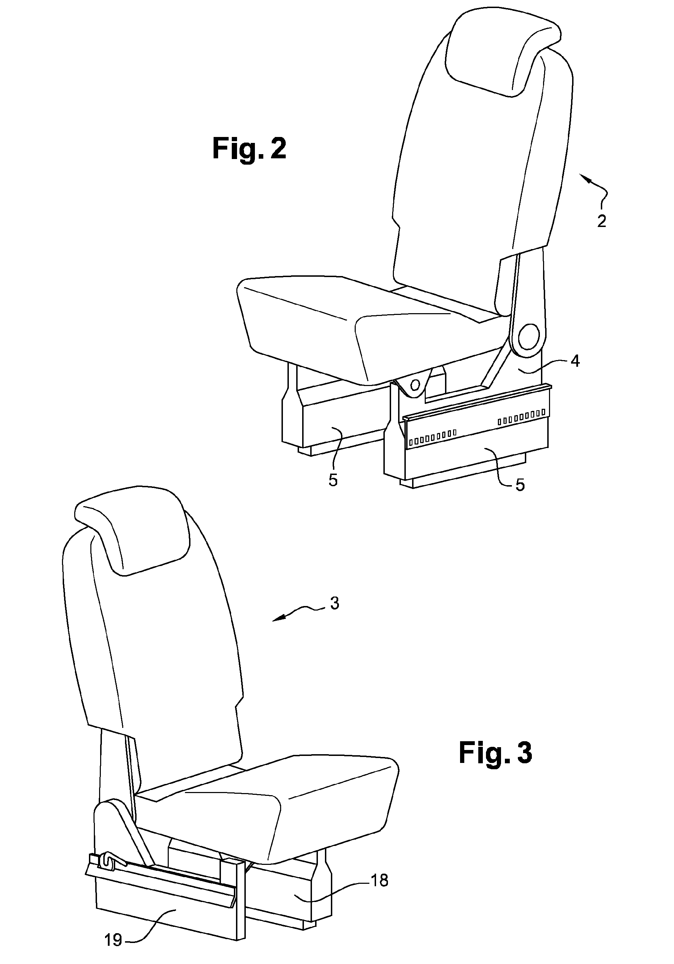

Le siège 3, tel qu'on peut le voir à la figure 3, est pour sa part doté de moyens d'accrochage qui sont destinés à coopérer avec la platine 7 de réception dont est doté le siège support 2.

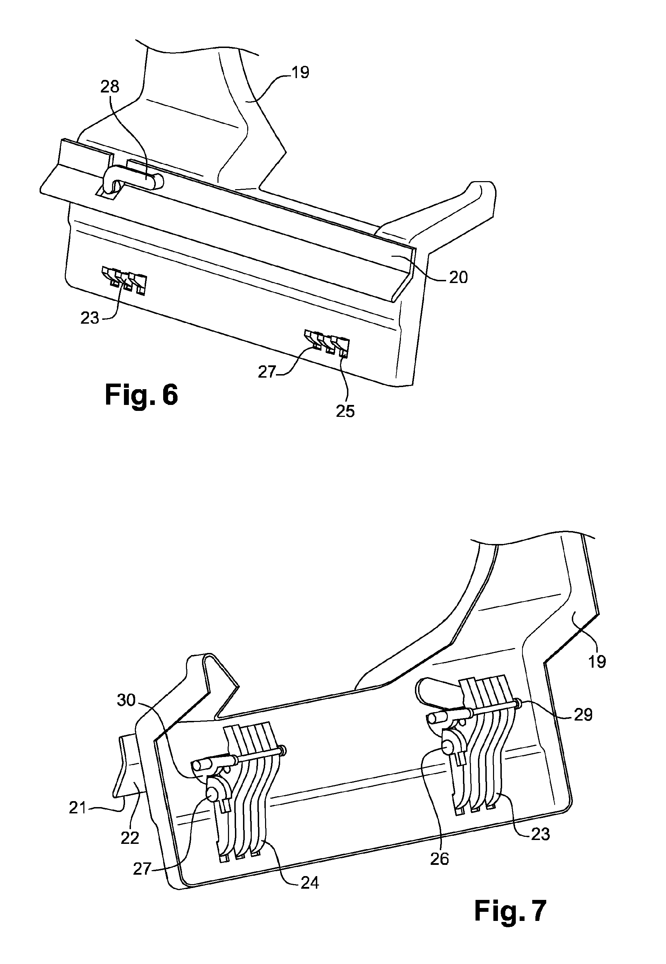

Ces moyens de réception sont plus particulièrement représentés aux figures 5 et 6.

Le siège 3 est doté d'un piètement formé de deux brancards latéraux 18 et 19 distincts qui peuvent être réalisés de manière conventionnelle en tôle emboutie.

Sur sa face extérieure, le brancard latéral 19 que l'on voit à la figure 6 ou à la figure7, est doté d'un rail d'accostage 20. Le rail d'accostage 20 présente un plan incliné qui se déporte du brancard latéral 19. En partie interne, le rail d'accostage 20 présente un profil en gradin comprenant une surface plane 21 et un épaulement interne 22.

Sur sa face intérieure représentée à la figure 6, le brancard latéral 19 du siège comprend des organes d'ancrage. Il s'agit de trois verrous antérieurs 23 et de trois verrous postérieurs 24. Ces verrous 23 et 24 possèdent une extrémité en forme de crochets qui s'insèrent dans des lumières 25 et qui dépassent sur la face extérieure du brancard 19. L'extrémité des verrous 23 et 24 en forme de crochets d'ancrage apparaît à la figure 6.

Chacun des verrous 23 et 24 est monté pivotant respectivement par rapport à un axe 26 et 27 et des actionneurs 29 et 30 permettent de faire pivoter les verrous 23 et 24 entre une position d'ancrage dans laquelle l'extrémité en forme de crochets des verrous 23 et 24 dépasse de la surface du brancard 19 par les lumière 25 et une position de déverrouillage dans laquelle les verrous 23 et 24 pivotent, de sorte que leur extrémité en forme de crochet reste à l'intérieur du brancard 19.

La commande des actionneurs peut être faite par une manette 28.

Un élément de synchronisation de l'actionneur antérieur 30 et de l'actionneur postérieur 29 permet, par un mouvement sur une manette 28 unique, d'agir simultanément sur les actionneurs 29 et 30.

Le brancard 18 du siège 3 peut comprendre un organe d'ancrage conventionnel dans une glissière 32.

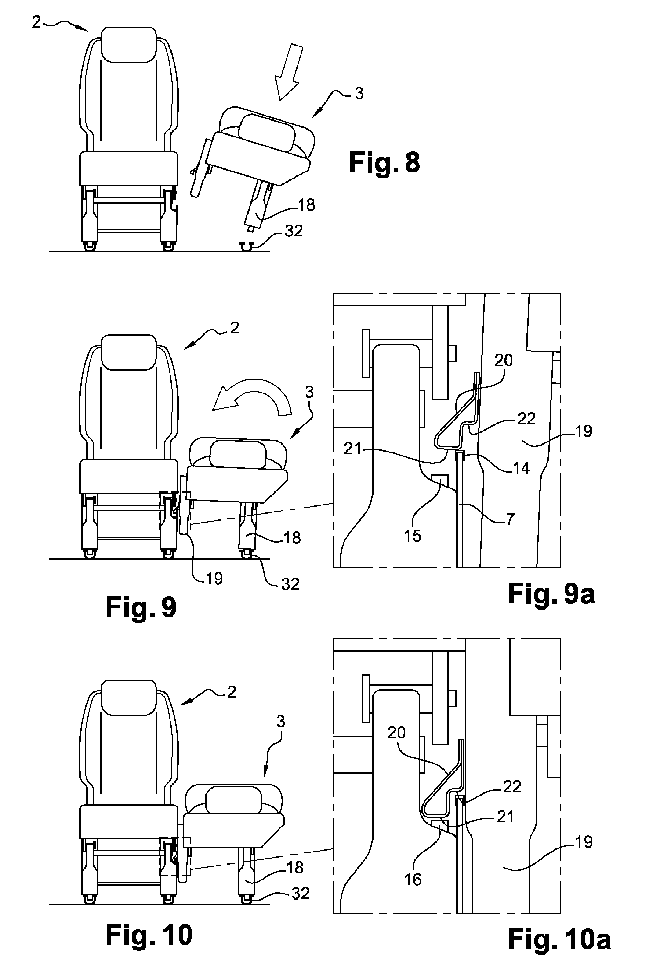

Les figures 8 à 10 montrent la manière avec laquelle se fait l'accostage d'un siège 3 sur un siège support 2 qui est lui-même attaché au véhicule.

Comme le montre la figure 8, le siège 3 est de préférence engagé de manière oblique par rapport au siège support 2, de sorte que son piètement destiné à s'engager dans l'unique glissière qui lui est dédiée soit réalisé dans un premier temps.

Dans un deuxième temps, comme on peut le voir à la figure 9, le siège 3 pivote en direction du siège support 2, de sorte que le rail d'accostage 20 vient se placer au-dessus de la platine 7 de réception.

En fin de mise en place du siège 3, le rail d'accostage 20 vient reposer sur les deux galets 16 dont le brancard du siège support 2 est doté.

La figure 10a montre plus précisément, le rail d'accostage 20 qui repose sur un galet 16 tandis que l'épaulement dont il est pourvu permet de laisser un dégagement à la platine 7 de réception.

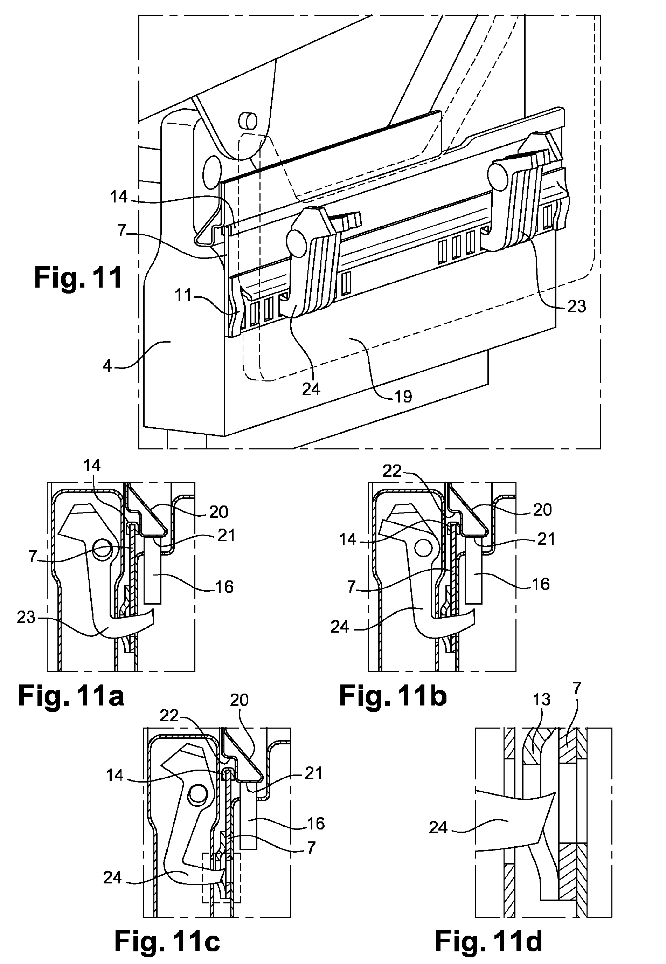

Pour ce qui est du verrouillage du siège 3 sur le siège support 2, on peut se reporter aux figures 11 à 13. En effet, durant l'accostage, les verrous d'ancrage viennent s'engager dans les lumières dont est doté le brancard du siège support 2.

La figure 11 montre l'action des verrous 23 et 24 d'ancrage. Il est prévu, dans chaque série de verrous d'ancrage, un verrou qui est monté de manière flottante sur son axe de rotation de manière à avoir un déplacement possible dans la direction verticale du siège. Le déplacement vertical sur une course peu importante permet de rattraper d'éventuels jeux.

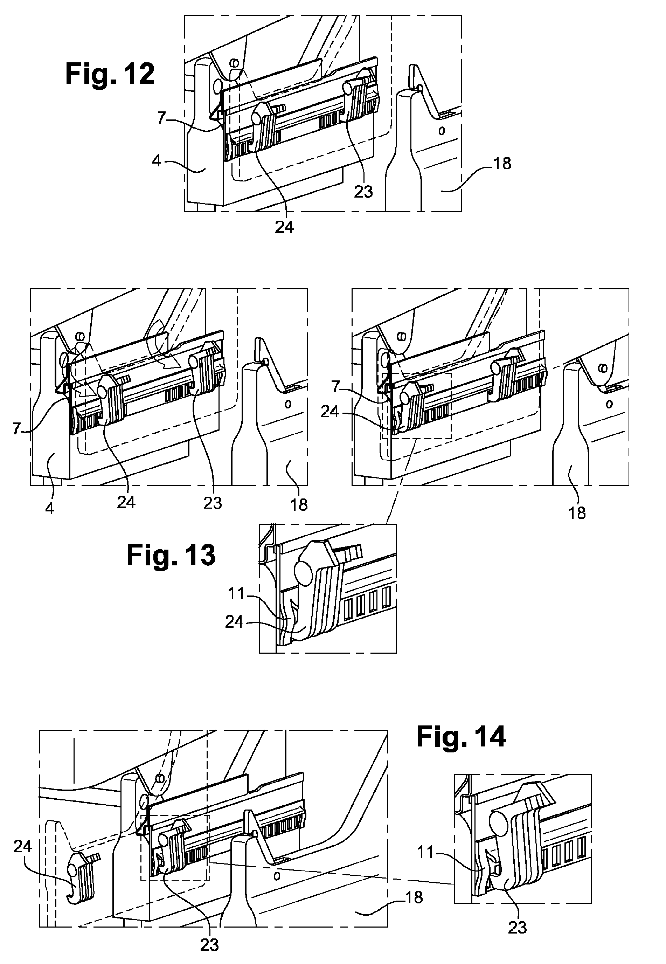

Les figures 12 à 14 montrent les modes de fonctionnement de l'ensemble selon l'invention.

La figure 12 montre, de manière statique, les moyens de réception coopérant avec les moyens d'accrochage dans une position nominale de l'ensemble.

La figure 13 fait apparaître la fonction de réglage de la position longitudinale du siège.

Comme le montre cette figure, les verrous 23 et 24 d'ancrage pivotent par rapport à leur axe et donc se dégagent des lumières 8 et 9 présentes dans la platine 7 de réception et dans le brancard du siège support 2.

Ainsi, le siège 3 peut, sur une course limitée par les butées 11 de la platine 7 de réception, être ajusté dans sa course longitudinale.

La figure 11d montre une des dispositions intéressantes de l'ensemble selon l'invention qui est, durant l'ajustement de sa position longitudinale, le siège est bloqué dans la direction Z par la nervure 13 en forme de lèvre.

En effet, lors de l'ajustement de la position longitudinale du siège, les verrous 23 et 24 d'ancrage sont dégagés des lumières 8 et 9 d'une course telle qu'ils restent au-dessous de la nervure 13 en forme de lèvre.

Une autre disposition tout à fait intéressante de l'ensemble selon l'invention est la possibilité de présenter une course pour un accès aux places qui se situent en arrière des sièges 3.

Pour cela, il est prévu que les verrous antérieurs possèdent une course angulaire qui les dégage de la butée dont est dotée la platine 7 de réception ; ainsi le siège peut avancer d'une distance permettant un accès facile aux places arrière.

Les verrous postérieurs 23 restent maintenus par la butée 11 pour éviter un dégagement du siège.

Bien entendu, l'invention n'est pas limitée aux formes de réalisation décrites ci-dessus, mais elle en embrasse au contraire toutes les variantes de réalisation. Le siège support 2 pourrait être lui-même mobile par rapport des glissières.

Dans une autre forme de réalisation de l'invention, le siège 3 peut être supporté par un passage de roue. Une telle forme de réalisation de l'invention permet ainsi de doter un véhicule de deux sièges mobiles séparément qui, chacun repose en partie sur un passage de roue et en partie sur une glissière.

## Revendications

1. Ensemble d'aménagement d'un habitacle d'un véhicule comprenant un siège (3), présentant une assise et un dossier, et un support faisant partie de l'habitacle du véhicule, **caractérisé en ce que** l'ensemble d'aménagement comprend (i) un dispositif de fixation du siège (3) sur le support et de réglage de la position du siège (3) par rapport audit support, comprenant des moyens d'accostage fixés sur une face latérale de l'assise du siège (3) conçus pour coopérer avec des moyens de réception fixés sur le support et des moyens de réception déconnectables permettant l'amovibilité du siège par rapport au support et **en ce que** (ii) le siège (3) possède un piétement destiné à coopérer avec une unique glissière (32) fixée sur un plancher du véhicule dans plusieurs positions.

2. Ensemble selon la revendication 1, **caractérisé en ce que** le support est un siège support (2) fixé de manière autonome sur le plancher du véhicule.

3. Ensemble selon la revendication 1 ou la revendication 2, **caractérisé en ce que** le siège support (2) comprend au moins une platine (7) de réception sur laquelle vient s'engager un rail d'accostage (20) fixé sur le siège (3).

4. Ensemble selon la revendication 3, **caractérisé en ce que** le siège support (2) comprend deux galets (16) disposés en retrait de la platine (7) de réception sur lesquels s'appuie une surface plane (21) du rail d'accostage (20).

5. Ensemble selon la revendication 3 ou la revendication 4, **caractérisé en ce que** la platine (7) de réception présente des lumières (8) qui coïncident avec des lumières (9) prévues dans un brancard latéral du siège support (2) et **en ce que** des verrous postérieurs (23) et antérieurs (24) embarqués sur un brancard (19) du siège (3) sont mobiles entre une position de verrouillage dans laquelle les verrous postérieurs (23) et antérieurs (24) s'engagent dans les lumières (8) et (9) et une position de déverrouillage dans laquelle les verrous (23) et (24) sont dégagés des lumières (8) et (9).

6. Ensemble selon la revendication 5, **caractérisé en ce que** la platine (7) de réception présente une nervure (13) qui surplombe les lumières (8) permettant aux verrous postérieurs (23) et antérieurs (24) d'être dégagés des lumières (8) autorisant un déplacement longitudinal du siège (3) et interdisant un déplacement vertical du siège (3).

7. Ensemble selon l'une des revendications 1 à 6, **caractérisé en ce que** le siège support (2) est associé à deux sièges (3).

8. Ensemble selon l'une des revendications 1 à 2, **caractérisé en ce que** le support est un passage de roue.

9. Véhicule automobile équipé d'un ensemble d'aménagement intérieur selon l'une des revendications 1 à 8.
